# FASCICULE DE BREVET EUROPEEN

(11) **EP 2 828 126 B1**
(45) Date de publication et mention de la délivrance du brevet: **05.04.2017**
(21) Numéro de dépôt: 13710455.0
(22) Date de dépôt: 14.02.2013
(51) Int. Cl.: B60R 21/02

(54) **VEHICULE AUTOMOBILE EQUIPE D'UN DISPOSITIF DE SECURITE A TRAVERSE ARTICULEE CONTRE LES CHOCS DE BAGAGES**
KRAFTFAHRZEUG MIT EINER SCHUTZVORRICHTUNG GEGEN GEPÄCKAUFPRALL UNTER VERWENDUNG EINER AUSLENKBAREN QUERSTANGE
MOTOR VEHICLE PROVIDED WITH A SAFETY DEVICE WITH A CROSSPIECE ARTICULATED AGAINST IMPACTS FROM LUGGAGE

(30) Priorité: 23.03.2012 FR 1252621
(43) Date de publication de la demande: 28.01.2015
(73) Titulaire: Peugeot Citroën Automobiles SA, 78140 Vélizy-Villacoublay (FR)
(72) Inventeur: DESPLANCHES, Patrice, F-78100 Saint Germain En Laye (FR); BENANE, Said, F-94550 Chevilly Larue (FR)
(86) Numéro de dépôt international: PCT/FR2013/050304
(87) Numéro de publication internationale: WO 2013/140053

(56) Documents cités:
- EP-A1- 1 514 739
- FR-A1- 2 875 759
- FR-A1- 2 885 575
- FR-A1- 2 918 942

## Description

La présente invention a trait aux véhicules automobiles équipés d'un dispositif de protection contre les chocs exercés par les bagages situés dans le coffre arrière du véhicule, ce dispositif s'étendant derrière le dossier de la banquette arrière.

Dans certains modèles de véhicules, le dossier de la banquette est, à des fins de légèreté, dépourvu d'armature. Dans ces conditions toutefois, le dossier ne peut seul résister aux chocs exercés par les bagages en cas de choc ou de freinage violent du véhicule.

C'est pourquoi ces modèles de véhicules sont généralement pourvus d'un dispositif rapporté de protection, généralement sous forme d'une cloison ou d'une traverse montée derrière le dossier et réalisée dans un matériau rigide (notamment en acier), qui a pour fonction de former une protection contre de tels chocs.

Cette cloison ou cette traverse doit être amovible pour pouvoir être démontée lorsqu'on veut augmenter le volume de chargement du véhicule en rabattant le dossier.

On connaît du document EP 0 825 071 une telle cloison de protection amovible fixée derrière le dossier de la banquette. Cette cloison comprend un cadre dans lequel est montée une grille. Cette conception a pour principaux défauts de n'offrir, en cas de chocs des bagages, ni une résistance suffisante à la rupture, ni une répartition correcte de la charge vers la caisse du véhicule, de part et d'autre du dossier.

Le document FR 2918942 décrit un véhicule ayant une caisse délimitant un coffre arrière conformément au préambule de la revendication 1.

Un premier objectif est de proposer un véhicule équipé d'un dispositif de protection offrant une résistance accrue aux chocs.

Un deuxième objectif est de proposer un véhicule équipé d'un dispositif de protection qui offre une meilleure répartition de la charge en cas de choc.

A cet effet, il est proposé un véhicule automobile ayant une caisse délimitant un coffre arrière, et une banquette arrière ayant un dossier, le véhicule étant en outre équipé d'un dispositif de protection contre l'intrusion d'objets, qui comprend :
- une traverse inférieure qui s'étend transversalement entre le dossier et le coffre au voisinage d'un bord inférieur du dossier, cette traverse étant solidaire de la caisse par deux extrémités transversales opposées, et
- des tirants qui relient sensiblement verticalement la traverse à la caisse, chaque tirant présentant une section inférieure par laquelle il est solidaire de la traverse inférieure, et une section supérieure par laquelle il est solidaire de la caisse.

Les tirants ont pour fonction de répartir la charge lors d'un choc en constituant une voie d'effort vers une partie haute de la caisse, ce qui permet de limiter la charge transmise en partie basse par la traverse inférieure, et ainsi de mieux préserver les occupants de la banquette.

Diverses caractéristiques supplémentaires peuvent être prévues, seules ou en combinaison :
- chaque tirant est incliné latéralement par rapport à la verticale ;
- chaque tirant forme avec la verticale un angle inférieur ou égal à 10° ;
- la section inférieure de chaque tirant est conformée en languette sensiblement plate ;
- la section supérieure de chaque tirant est conformée en spatule ;
- la section supérieure présente un embouti ;
- le dispositif de protection comprend une traverse supérieure fixée à la caisse par deux extrémités transversales opposées, et chaque tirant est solidaire de la traverse supérieure par sa section supérieure ;
- la traverse supérieure est solidaire de la caisse par l'intermédiaire de pièces de renfort solidaires des extrémités transversales de la traverse supérieure, et en ce que chaque tirant est solidaire d'une pièce de renfort par sa section supérieure ;
- la traverse inférieure comprend un emboutit oblong inférieur et un embouti oblong supérieur séparés par une portion médian plane, et la fixation de la traverse inférieure à la caisse par ses extrémités transversales est réalisée au droit de l'embouti inférieur ;
- chaque tirant est fixé sur la traverse inférieure par une pluralité de points de soudure électrique.

D'autres objets et avantages de l'invention apparaîtront à la lumière de la description d'un mode préféré de réalisation, faite ci-après en référence aux dessins annexés dans lesquels :
- la figure 1 est une vue en perspective montrant, de l'intérieur, la partie arrière d'un véhicule automobile équipé d'un dispositif de protection contre les chocs de bagages ;
- la figure 2 est une vue en perspective de détail montrant le dispositif de protection, selon l'encart II de la figure 1 ;
- la figure 3 est une vue de face montrant la partie arrière du véhicule, le dossier de la banquette arrière ayant été enlevé pour libérer l'accès visuel au dispositif de protection ;
- la figure 4 est une vue similaire à la figure 1, sur laquelle on a représenté, en trait mixte, la configuration du dispositif de protection en cas de choc intrusif des bagages ;
- la figure 5 est une vue de détail en coupe selon le plan V-V de la figure 3.

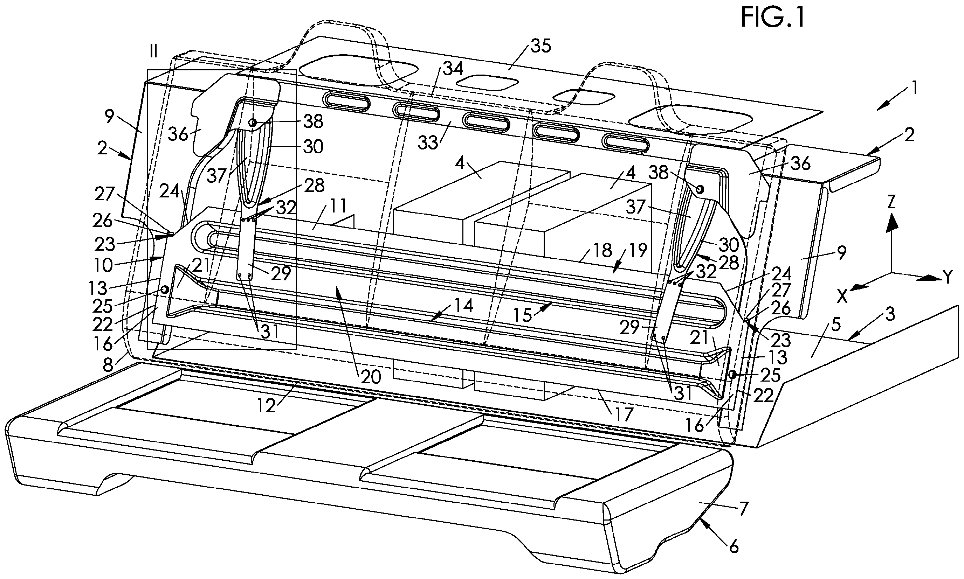

Sur la figure 1 est illustré un véhicule **1** automobile comprenant une caisse **2** qui délimite un coffre **3** arrière propre à accueillir divers des objets **4**, tels que des bagages. Le coffre **3** comprend un plancher **5** (représenté plat sur les figures, pour des raisons de simplicité).

Le véhicule **1** comprend également une banquette **6** arrière ayant une assise **7** et un dossier **8** articulé par rapport à la caisse **2** entre une position relevée (en trait mixte sur la figure 1) dans laquelle le dossier **8** est en appui contre des éléments **9** latéraux de caisse, et une position rabattue (non représentée) dans laquelle une face arrière du dossier s'étend sensiblement dans le prolongement du plancher **5**.

On définit par rapport au véhicule un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le véhicule **1** est en outre équipé d'un dispositif **10** de protection contre l'intrusion dans l'habitacle du véhicule des objets **4** situés dans le coffre **3**. Ce dispositif **10** comprend, en premier lieu, une traverse **11** inférieure qui s'étend transversalement entre le dossier **8** et le coffre **3**, au voisinage d'un bord **12** inférieur du dossier **8**.

Cette traverse **11**, de préférence réalisée dans une tôle d'acier, présente deux extrémités **13** transversales opposées, par laquelle la traverse **11** est solidaire de la caisse **2**, et plus précisément des éléments **9** latéraux.

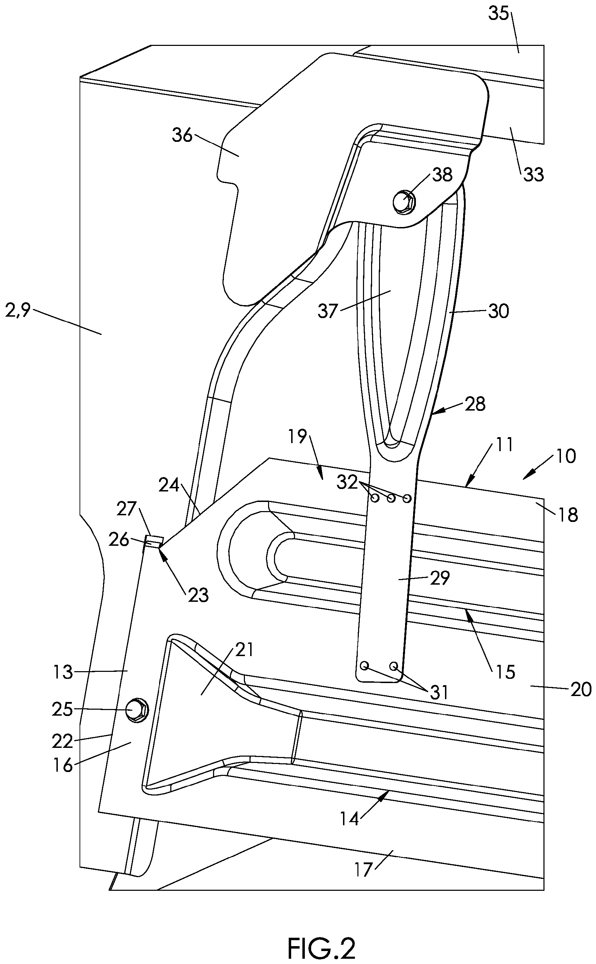

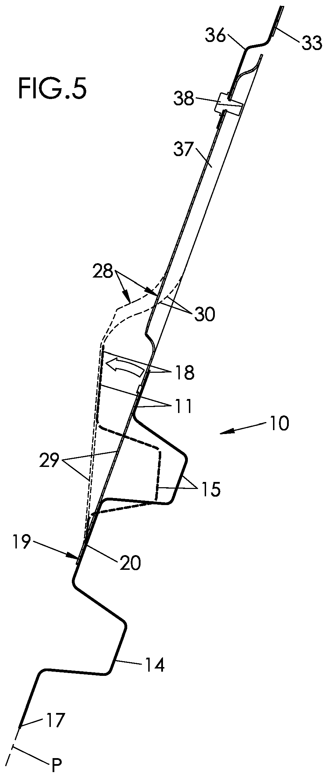

Comme on le voit sur les dessins, et plus en détail sur les figures 2 et 5, la traverse **11** comprend deux emboutis **14**, **15** oblongs qui s'étendent transversalement d'une extrémité à l'autre de la traverse **11** (tout en laissant à chaque extrémité **13** une bande **16** de matière suffisante pour permettre la fixation de la traverse **11**, comme nous le verrons ci-après), à savoir :
- un embouti **14** inférieur, qui s'étend à proximité et le long d'un bord **17** inférieur de la traverse **11**, et
- un embouti **15** supérieur, qui s'étend à proximité et le long d'un bord **18** supérieur de la traverse **11**.

Les emboutis **14**, **15** sont creusés vers l'arrière depuis une face **19** avant de la traverse **11** et peuvent être réalisés par emboutissage à partir d'un élément de tôle plane ; les emboutis **14**, **15** présentent de préférence en section selon XZ un profil trapézoïdal facilitant leur mise en forme.

Les emboutis **14**, **15** sont séparés par une portion **20** médiane plane qui s'étend d'une extrémité transversale à l'autre de la traverse **11**. Comme on le voit bien sur la figure 2, l'embouti **15** supérieur est fermé à chacune des extrémités transversales, tandis que l'embouti **14** inférieur se termine, à chacune des extrémités transversales, par une portion **21** inclinée qui joint le fond de l'embouti **14** à la bande **16** de matière.

Comme on le voit également, l'extrémité **13** transversale de la traverse **11** présente un bord **22** droit, qui s'étend sensiblement suivant Z depuis le bord **17** inférieur de la traverse **11** jusqu'à un point **23** situé approximativement dans l'axe de l'embouti **15** supérieur, ce bord **22** droit se prolongeant à partir de ce point **23** par un pan **24** coupé (environ à **45**°) jusqu'au bord **18** supérieur de la traverse **11**.

La fixation de la traverse **11** inférieure aux éléments **9** latéraux de caisse est réalisée par les extrémités **13** transversales au droit de l'embouti **14** inférieur. Plus précisément, cette fixation est réalisée en un point situé sur la bande **16** de matière au droit (et de préférence dans l'axe, comme illustré sur la figure 2) de l'embouti **14** inférieur. Dans un mode de réalisation préféré, qui correspond à l'exemple illustré, cette fixation est réalisée au moyen d'une vis **25** à chaque extrémité **13**. Pour faciliter le positionnement de la traverse **11** lors du montage, on peut munir la traverse **11** de languettes **26** repliées en équerre, qui viennent se loger dans des ouvertures **27** pratiquées dans les éléments **9** latéraux de caisse. Dans l'exemple illustré, ces languettes **26** sont situées au point **23** de jonction entre le bord **22** droit et le pan **24** coupé.

Comme cela est visible sur la figure 5, la traverse **11** s'étend sensiblement parallèlement au dossier **8**, dans un plan P principal incliné par rapport au plan vertical YZ, d'un angle supérieur ou égal à **10**° (en l'espèce d'environ **20**°).

Le dispositif de protection comprend par ailleurs des tirants **28** formant des ponts reliant la traverse **11** à la caisse **2**. Chaque tirant **28** s'étend dans le plan P principal à la manière d'une bretelle entre une partie de la traverse **11** inférieure située à proximité d'une extrémité **13** transversale, et une partie haute de la caisse **2** (et plus précisément d'un élément **9** latéral).

Chaque tirant **28** se présente sous forme d'une pièce métallique rapportée, de préférence réalisée par emboutissage d'une tôle d'acier. Le tirant **28** présente une section **29** inférieure, conformée en languette sensiblement plate, par laquelle le tirant **28** est solidaire de la traverse **11** inférieure, et une section **30** supérieure, conformée en spatule creuse, par laquelle le tirant **28** est solidaire de la caisse **2**.

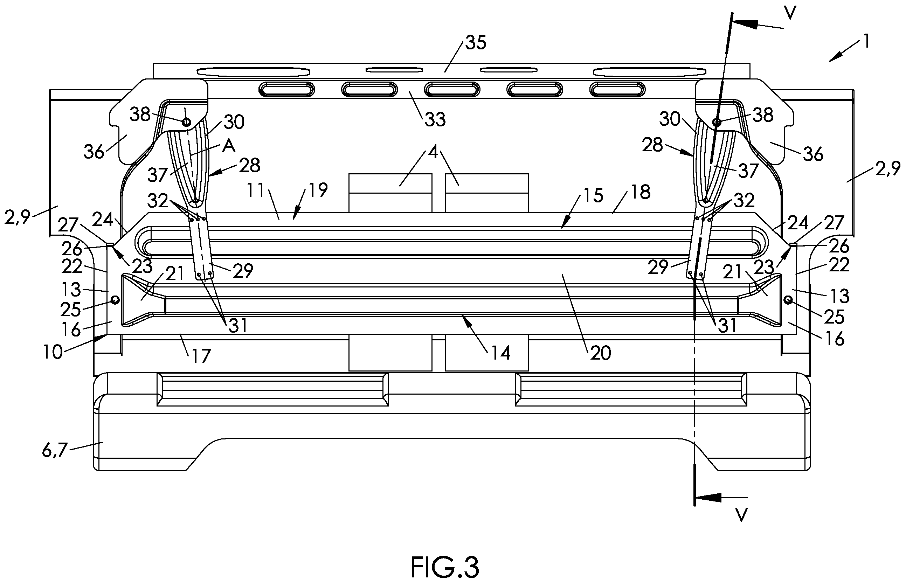

Comme on le voit sur la figure 3, chaque tirant **28** s'étend suivant un axe A incliné par rapport à la verticale (vu dans le plan YZ de la figure 3), avec lequel il forme un angle inférieur ou égal à **10**°. Dans l'exemple illustré, cet angle est de l'ordre de **6**° environ.

La section **29** inférieure de chaque tirant **28** s'étend à cheval sur l'embouti **15** supérieur et rejoint la portion **20** médiane de la traverse **11** inférieure. La section **29** inférieure est fixée à demeure sur la face **19** avant de la traverse **11** inférieure, de préférence au moyen de points **31**, **32** de soudure électrique. Dans l'exemple illustré (cf. figure 3), ces points de soudure sont au nombre de cinq, et comprennent deux points **31** situés à une extrémité inférieure du tirant **28**, au droit de la portion **20** médiane de la traverse **11** inférieure, et trois points **32** situés au voisinage de la jonction entre la section **29** inférieure du tirant **28** et sa section **30** supérieure, entre le bord **18** supérieur de la traverse **11** et l'embouti **15** supérieur.

Selon un mode de réalisation préféré illustré sur les figures, le dispositif **10** de protection comprend en outre une traverse **33** supérieure qui s'étend transversalement au voisinage d'un bord **34** supérieur du dossier **8**. Cette traverse **33** supérieure constitue un renfort d'une tablette **35** ou d'une plage arrière formant une limite supérieure au coffre **3**.

La traverse **33** supérieure est fixée à la caisse **2** par deux extrémités transversales opposées, de préférence par l'intermédiaire de pièces **36** de renfort qui peuvent être des excroissances des éléments **9** latéraux ou, comme illustré sur les figures, des pièces rapportées fixées aux éléments **9** latéraux, par exemple par soudure.

La section **30** supérieure de chaque tirant **28** (qui présente de préférence un embouti **37** aux fins de rigidité), est fixée sur la traverse **33** supérieure, de préférence par l'intermédiaire des pièces **36** de renfort. Comme on le voit bien sur les figures 2 et 3, la fixation de la section **30** supérieure sur la pièce **36** de renfort est réalisée par un point unique, en l'espèce au moyen d'une vis **38**.

Les vis **25**, **38** ont l'avantage de permettre une fixation amovible à la caisse **2** de l'ensemble constitué de la traverse **11** inférieure et des tirants **28**. L'utilisateur peut ainsi retirer cet ensemble lorsqu'il souhaite augmenter le volume du coffre **3** en rabattant le dossier **8**.

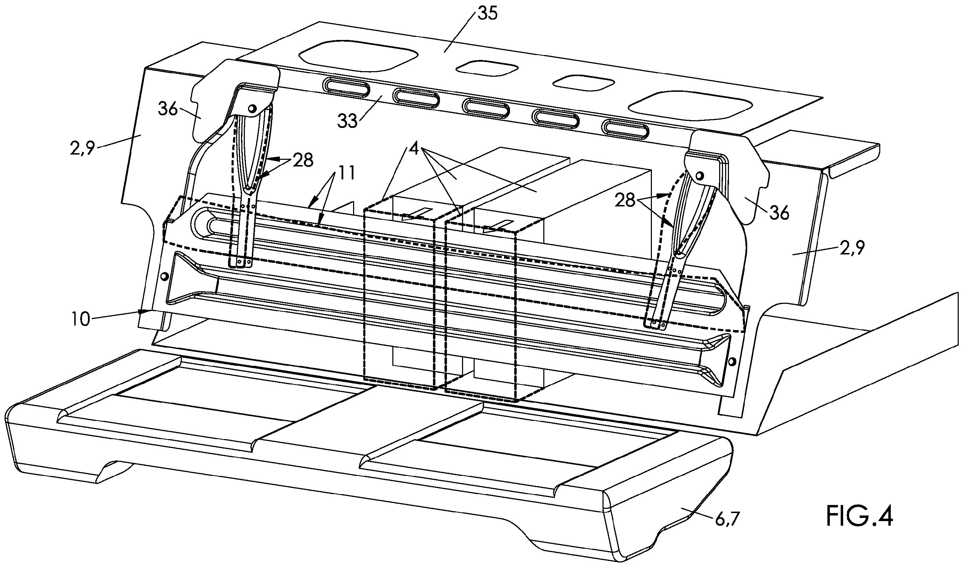

On a représenté en pointillés sur les figures 4 et 5 la déformation programmée de l'ensemble constitué de la traverse **11** et des tirants **28** lors d'un choc frontal des objets **4** contre la traverse **11**. Lors d'un tel choc, les objets **4** se déplacent suivant X, vers l'avant (direction indiquée sur la figure 4 par les flèches). Dans ce cas, les objets **4** exercent sur la partie supérieure de la traverse **11** un effort de flexion. Compte tenu de la fixation rigide de la traverse **11** au droit de l'embouti **15** inférieur, celui-ci offre une résistance à l'effort de flexion, et la charge est (au moins partiellement) absorbée par un effet de pliage (également dénommé rotulage) de la traverse **11** le long de la portion **20** médiane.

Les tirants **28** ont pour fonction de limiter l'effet de rotulage en constituant une voie d'effort répartissant la charge vers la partie haute de la caisse **2** (c'est-à-dire, en l'espèce, vers la traverse **33** supérieure).

On voit sur la figure 5 que les tirants **28** se déforment par flexion, essentiellement au niveau de la jonction entre section **29** inférieure (plate et donc apte à fléchir) et la section **30** supérieure (rigidifiée par l'embouti).

Cette architecture permet de préserver des chocs les occupants de la banquette **6**, tout en évitant de recourir à une lourde et complexe ossature interne pour celle-ci.

## Revendications

1. Véhicule (**1**) automobile ayant une caisse (**2**) délimitant un coffre (**3**) arrière, et une banquette (**6**) arrière ayant un dossier (**8**), le véhicule (**1**) étant en outre équipé d'un dispositif (**10**) de protection contre l'intrusion d'objets (**4**), qui comprend une traverse (**11**) inférieure qui s'étend transversalement entre le dossier (**8**) et le coffre (**3**) au voisinage d'un bord (**12**) inférieur du dossier (**8**), cette traverse (**11**) étant solidaire de la caisse (**2**) par deux extrémités (**13**) transversales opposées, le dispositif (**10**) de protection comprenant des tirants (**28**) qui relient sensiblement verticalement la traverse (**11**) à la caisse (**2**), chaque tirant (**28**) présentant une section (**29**) inférieure par laquelle il est solidaire de la traverse (**11**) inférieure, et une section (**30**) supérieure par laquelle il est solidaire de la caisse (**2**), **caractérisé en ce que** la section (**30**) supérieure de chaque tirant (**28**) est conformée en spatule.

2. Véhicule (**1**) selon la revendication **1**, **caractérisé en ce que** chaque tirant (**28**) est incliné latéralement par rapport à la verticale.

3. Véhicule (**1**) selon la revendication **2**, **caractérisé en ce que** chaque tirant (**28**) forme avec la verticale un angle inférieur ou égal à **10**°.

4. Véhicule (**1**) selon l'une des revendications précédentes, **caractérisé en ce que** la section (**29**) inférieure de chaque tirant (**28**) est conformée en languette sensiblement plate.

5. Véhicule (**1**) selon l'une des revendications précédentes, **caractérisé en ce que** la section (**30**) supérieure présente un embouti.

6. Véhicule (**1**) selon l'une des revendications précédentes, **caractérisé en ce que** le dispositif (**10**) de protection comprend une traverse (**33**) supérieure fixée à la caisse (**2**) par deux extrémités transversales opposées, et **en ce que** chaque tirant (**28**) est solidaire de la traverse (**33**) supérieure par sa section (**30**) supérieure.

7. Véhicule (**1**) selon la revendication **6**, **caractérisé en ce que** la traverse (**33**) supérieure est solidaire de la caisse (**2**) par l'intermédiaire de pièces (**36**) de renfort solidaires des extrémités transversales de la traverse (**33**) supérieure, et **en ce que** chaque tirant (**28**) est solidaire d'une pièce de renfort (**36**) par sa section (**30**) supérieure.

8. Véhicule (**1**) selon l'une des revendications précédentes, **caractérisé en ce que** la traverse (**11**) inférieure comprend un embouti (**14**) oblong inférieur et un embouti (**15**) oblong supérieur séparés par une portion (**20**) médian plane, et **en ce que** la fixation de la traverse (**11**) inférieure à la caisse (**2**) par ses extrémités (**13**) transversales est réalisée au droit de l'embouti (14) inférieur.

9. Véhicule (**1**) selon l'une des revendications précédentes, **caractérisé en ce que** chaque tirant (**28**) est fixé sur la traverse (**11**) inférieure par une pluralité de points (**31**, **32**) de soudure électrique.

## Patentansprüche

1. Kraftfahrzeug (1), das eine Karosserie (2) aufweist, die einen hinteren Kofferraum (3) und eine hintere Sitzbank (6) mit einer Rückenlehne (8) eingrenzt, wobei das Fahrzeug (1) darüber hinaus mit einer Schutzvorrichtung (10) gegen das Eindringen von Gegenständen (4) ausgestattet ist, die eine untere Traverse (11) umfasst, die sich querlaufend zwischen der Rückenlehne (8) und dem Kofferraum (3) in der Nähe eines unteren Randes (12) der Rückenlehne (8) erstreckt, wobei diese Traverse (11) durch zwei gegenüber liegende querlaufende Enden (13) fest mit der Karosserie (2) verbunden ist, wobei die Schutzvorrichtung (10) Spannstangen (28) umfasst, welche die Traverse (11) in etwa vertikal mit der Karosserie (2) verbinden, wobei jede Spannstange (28) einen unteren Abschnitt (29) aufweist, über den sie fest mit der unteren Traverse (11) verbunden ist, sowie einen oberen Abschnitt (30), mit dem sie fest mit der Karosserie (2) verbunden ist, **dadurch gekennzeichnet, dass** der obere Abschnitt (30) einer jeden Spannstange (28) als Schaufel ausgeführt ist.

2. Fahrzeug (1) nach Anspruch 1, **dadurch gekennzeichnet, dass** jede Spannstange (28) seitlich im Verhältnis zur Vertikalen geneigt ist.

3. Fahrzeug (1) nach Anspruch 2, **dadurch gekennzeichnet, dass** jede Spannstange (28) mit der Vertikalen einen Winkel kleiner oder gleich 10° einschlägt.

4. Fahrzeug (1) nach einem der vorhergehenden Ansprüche, **dadurch gekennzeichnet, dass** der untere Abschnitt (29) einer jeden Spannstange (28) als in etwa flache Zunge ausgeformt ist.

5. Fahrzeug (1) nach einem der vorhergehenden Ansprüche, **dadurch gekennzeichnet, dass** der obere Abschnitt (30) eine Einstülpung aufweist.

6. Fahrzeug (1) nach einem der vorhergehenden Ansprüche, **dadurch gekennzeichnet, dass** die Schutzvorrichtung (10) eine obere Traverse (33) umfasst, die durch zwei gegenüber liegende querlaufende Enden fest mit der Karosserie (2) verbunden ist, und dadurch, dass jede Spannstange (28) durch ihren oberen Abschnitt (30) fest mit der oberen Traverse (33) verbunden ist.

7. Fahrzeug (1) nach Anspruch 6, **dadurch gekennzeichnet, dass** die obere Traverse (33) durch Verstärkungsteile (36) fest mit der Karosserie (2) verbunden ist, die fest mit den querlaufenden Enden der oberen Traverse (33) verbunden sind, und dadurch, dass jede Spannstange (28) durch ihren oberen Abschnitt (30) fest mit einem Verstärkungsteil (36) verbunden ist.

8. Fahrzeug (1) nach einem der vorhergehenden Ansprüche, **dadurch gekennzeichnet, dass** die untere Traverse (11) eine untere längliche Einstülpung (14) und eine obere längliche Einstülpung (15) umfasst, die durch einen flachen mittleren Abschnitt (20) voneinander getrennt sind, und dadurch, dass die Befestigung der unteren Traverse (11) an der Karosserie (2) durch ihre querlaufenden Enden (13) auf Höhe der unteren Einstülpung (14) erfolgt.

9. Fahrzeug (1) nach einem der vorhergehenden Ansprüche, **dadurch gekennzeichnet, dass** jede Spannstange (28) durch eine Vielzahl von elektrischen Schweißpunkten (31, 32) an der unteren Traverse (11) befestigt ist.

## Claims

1. Motor vehicle (1) having a body (2) delimiting a rear boot (3), and a rear seat (6) having a backrest (8), the vehicle (1) further being equipped with a device (10) for protecting against the intrusion of objects (4), which comprises a lower cross member (11) that extends transversely between the backrest (8) and the boot (3) in the vicinity of a lower edge (12) of the backrest (8), this cross member (11) being secured to the body (2) by two opposite transverse ends (13), the protection device (10) comprising tie rods (28) that substantially vertically connect the cross member (11) to the body (2), each tie rod (28) having a lower section (29) by means of which it is secured to the lower cross member (11), and an upper section (30) by means of which it is secured to the body (2), **characterised in that** the upper section (30) of each tie rod (28) is shaped like a spatula.

2. Vehicle (1) according to claim 1, **characterised in that** each tie rod (28) is inclined laterally with respect to the vertical.

3. Vehicle (1) according to claim 2, **characterised in that** each tie rod (28) forms with the vertical an angle less than or equal to 10°.

4. Vehicle (1) according to one of the preceding claims, **characterised in that** the lower section (29) of each tie rod (28) is conformed as a substantially flat tongue.

5. Vehicle (1) according to one of the preceding claims, **characterised in that** the upper section (30) has a dished area.

6. Vehicle (1) according to one of the preceding claims, **characterised in that** the protective device (10) comprises an upper cross member (33) fixed to the body (2) by two opposite transverse ends, and **in that** each tie rod (28) is secured to the upper cross member (33) by its upper section (30).

7. Vehicle (1) according to claim 6, **characterised in that** the upper cross member (33) is secured to the body (2) by means of reinforcement pieces (36) secured to the transverse ends of the upper cross member (33), and **in that** each tie rod (28) is secured to a reinforcement part (36) by its upper section (30).

8. Vehicle (1) according to one of the preceding claims, **characterised in that** the lower cross member (11) comprises a lower oblong dished area (14) and an upper oblong dished area (15) separated by a flat middle portion (20), and **in that** the fixing of the lower cross member (11) to the body (2) by its transverse ends (13) is done in line with the lower dished area (14).

9. Vehicle (1) according to one of the preceding claims, **characterised in that** each tie rod (28) is fixed to the lower cross member (11) by a plurality of electric-welding points (31, 32).
